# FASCICULE DE BREVET EUROPEEN

(11) **EP 0 491 610 B1**
(45) Date de publication et mention de la délivrance du brevet: **01.03.1995**
(21) Numéro de dépôt: 91403400.4
(22) Date de dépôt: 16.12.1991
(51) Int. Cl.: F16L 33/02

(54) **Collier de serrage élastique**
Elastisches Spannband
Resilient clamping band

(30) Priorité: 19.12.1990 FR 9015955
(43) Date de publication de la demande: 24.06.1992
(73) Titulaire: Etablissements CAILLAU, F-92130 Issy-les-Moulineaux (FR)
(72) Inventeur: Calmettes, Lionel, F-41200 Romorantin Lanthenay (FR); Andre, Michel, F-41200 Romorantin Lanthenay (FR)
(74) Mandataire: Descourtieux, Philippe

(56) Documents cités:
- EP-A- 0 334 132
- US-A- 3 402 436

## Description

Le brevet EP-A-3 192 a décrit un collier de serrage constitué par une bande de métal enroulée sur elle-même, dont les deux extrémités sont respectivement pourvues d'un pli radial, formant point d'appui pour le serrage du collier au moyen d'un outil du genre pince.

Le pli radial de l'une des extrémités de la bande, de préférence de l'extrémité du brin extérieur, est muni d'un crochet susceptible de passer derrière le pli radial de l'autre extrémité, au cours de l'opération de serrage du collier, en vue de s'y accrocher et de maintenir ainsi le collier dans sa position serrée. D'autre part, l'extrémité du brin intérieur de la bande, dont le pli radial est de préférence sans crochet, se prolonge au-delà dudit pli au moins au-delà du crochet dans la position fermée du collier.

Un tel collier de serrage est largement utilisé dans l'industrie, notamment dans la construction automobile, en particulier pour assurer la fixation d'un tuyau souple emmanché sur un tube rigide.

Cependant, les exigences de la technique devenant de plus en plus sévères, il apparaît essentiel de donner aux colliers du type en question, une structure telle qu'il puisse satisfaire à deux conditions apparemment contradictoires.

En effet, sans accepter une modification notable de la pression radiale exercée par le collier sur l'organe serré, tel qu'un tuyau en caoutchouc, on exige maintenant du collier, d'une part, une possibilité d'extension élastique sous l'effet des dilatations thermiques, quelquefois importantes, de l'organe serré et de son support, par exemple au cours du fonctionnement d'un moteur, d'autre part, une possibilité de rétraction élastique si la température ambiante devient très inférieure à la température à laquelle le montage du collier a été effectué, par exemple après l'arrêt du moteur dans une zone de grand froid.

Une élément de réponse à ces exigences a déjà été fourni par EP-A-344 132, qui propose un collier de serrage selon le préambule de la revendication 1. L'invention se propose, par la forme et la position du groupe d'ondulations selon la partie caractérisante de la revendication 1, d'encore améliorer l'élasticité du collier.

L'invention sera mieux comprise et ses avantages apparaîtront au cours de la description d'un mode de réalisation en référence au dessin annexé, dans lequel
- la figure 1 est une vue en élévation et de profil d'un collier de serrage conforme à l'invention.
- la figure 2 est une vue agrandie d'un "groupe de deux ondulations".

Si l'on se reporte au dessin, on voit un collier du type décrit dans le brevet européen précité. La bande métallique **1**, enroulée sur elle-même, comporte au voisinage de l'extrémité du brin intérieur une oreille **2** constituée par un pli radial, lequel est lié à un prolongement **3** situé sous le brin extérieur. Ce dernier comporte un crochet désigné par la référence générale **4**.

A l'état ouvert du collier, tel qu'il est représenté sur le dessin, le crochet **4** est situé à quelque distance de l'oreille **2**, mais le prolongement **3** s'étend déjà au-delà du crochet **4**. De préférence, ainsi qu'on le voit, le bord terminal du prolongement **3** présente une forme de fourchette susceptible de coopérer avec un bossage **1a** faisant radialement saillie sur la face interne de la bande, ainsi qu'on l'a décrit dans le brevet EP-A-243 224.

Sur le brin extérieur du collier, à quelque distance du crochet **4**, la bande est conformée par divers replis, faisant radialement saillie par rapport au collier et constituant ce que l'on a déjà appelé "un groupe de deux ondulations", désigné par la référence générale **5**. Chacune des deux ondulations **5a** et **5b** est elle-même en forme de boucle ouverte (ou demi-boucle), dont l'une des extrémités est raccordée au collier et dont l'autre extrémité est raccordée à l'extrémité en regard de l'autre ondulation.

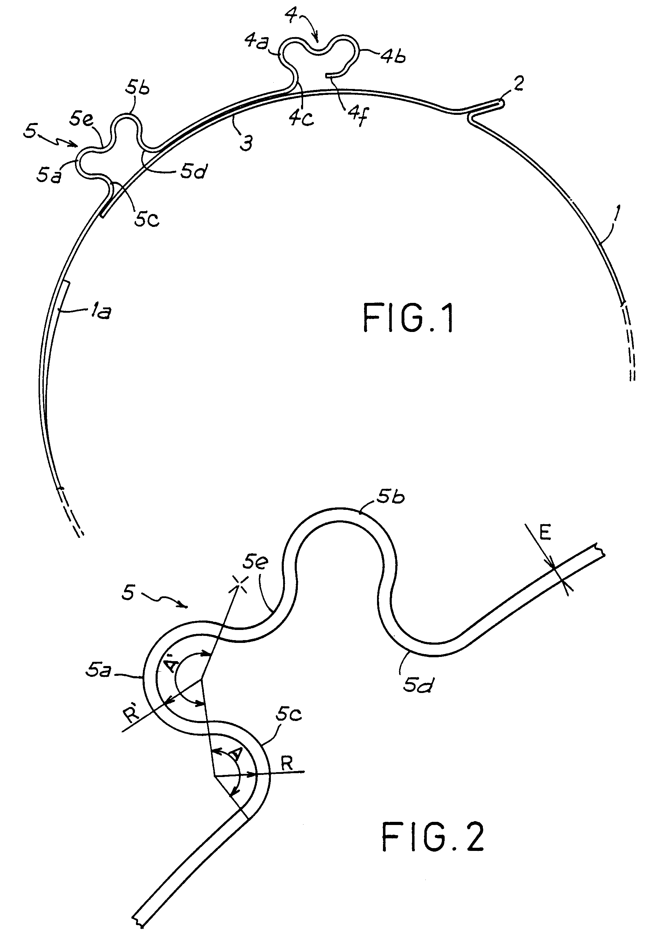

En se référant plus particulièrement à la figure 2, on voit que la zone de raccordement **5c** (ou **5d**) de l'ondulation **5a** (ou **5b**) au collier est constituée par une portion de la bande **1** dont le profil, bien visible sur le dessin, est sensiblement circulaire. Le rayon **R** du cercle de cette zone de raccordement doit être suffisant pour les raisons qui apparaîtront plus loin, sans conduire cependant à une saillie radiale des ondulations trop importante.

On a constaté qu'il est pratiquement indispensable que le rayon **R** soit au moins égal à deux fois l'épaisseur **E** de la bande métallique, pour obtenir les résultats recherchés.

De plus, il est essentiel que l'arc de cercle **A** constitué par une zone de raccordement, entre le brin du collier et le début de l'ondulation **5a** (ou **5b**), soit au moins égal à 90° et même, de préférence voisin de 150°. La mesure de cet arc de cercle **A** s'effectue bien évidemment entre les perpendiculaires abaissées, depuis le centre du cercle de rayon **R,** d'une part sur le brin du collier, d'autre part, sur la bande dans la région de changement de courbure entre la zone de raccordement et l'ondulation correspondante.

Une ondulation **5a** (ou **5b**) est, de préférence, également constituée par une portion de bande de profil circulaire, dont le rayon **R′** sera avantageusement voisin de celui de sa zone de raccordement au collier. En fonction des impératifs techniques, notamment des exigences de limitation de l'encombrement radial, le rayon **R′** pourra néanmoins être supérieur au rayon **R.**

Les deux ondulations **5a** et **5b** sont enfin reliées l'une à l'autre par une portion **5e**, de préférence également circulaire, dont la concavité est généralement inverse de celle des deux ondulations **5a** et **5b**.

On soulignera ici que l'arc de cercle **A′** correspondant à une ondulation - sa mesure étant effectuée, d'une façon analogue à celle précédemment décrite, entre les deux régions de changement de courbure situées aux extrémités de l'ondulation - sera avantageusement aussi grand que possible, compte tenu des nécessités de la fabrication. En pratique cet arc **A′** ne devra sans doute pas dépasser 250° de sorte que l'ondulation présentera généralement la forme d'une demi-boucle ouverte. Dans ce dernier cas la portion **5e** est nécessairement courbe, sa concavité étant dirigée, comme on l'a déjà indiqué, vers l'extérieur du collier et sa courbure étant, de préférence, au plus égale à celle des zones de raccordement **5c** et **5d**. Cependant on conçoit facilement que cette portion **5e** pourrait être rectiligne dans certaines réalisations de l'invention.

Ainsi qu'on le voit sur le dessin, le crochet **4** est lui-même constitué par un groupe de deux ondulations **4a** et **4b** dont la conformation est analogue, et de préférence identique, à celle des ondulations **5a** et **5b** précédemment décrites. De même la zone de raccordement **4c** du crochet **4** au brin extérieur du collier ainsi que la portion **4e** de raccordement des deux ondulations **4a** et **4b** présenteront des conformations analogues, et de préférence identiques à celles des éléments **5c** et **5e** précédemment décrits. Toutefois il est évident que l'une des extrémités **4f** de l'ondulation **4b** doit être libre pour constituer l'extrémité libre du crochet **4**.

Au moment du serrage du collier, l'outil prend appui sur l'oreille **2** et la zone de raccordement **4a** pour faire passer l'extrémité libre **4f** du crochet **4** derrière l'oreille **2.** Dans l'exemple représenté, le prolongement **3** s'étend au-delà du groupe d'ondulations **5** lorsque le collier est en position ouverte. Il pourrait ne pas en être toujours ainsi, mais il est essentiel, ainsi qu'on le sait, qu'en position fermée du collier ce prolongement s'étende non seulement sous le crochet **4** mais également jusqu'au-delà de l'espace situé entre les deux zones de raccordement **5c** et **5d.**

Bien évidemment un collier selon l'invention pourra ne comporter que le groupe d'ondulations **5**, son crochet **4** étant réalisé d'une façon connue. De même, il pourrait comporter un crochet **4** du type de celui qui a été décrit sans qu'il soit prévu de groupe d'ondulations **5** ou, au contraire, même s'il est prévu plusieurs groupes d'ondulations **5.**

Au cours du serrage les diverses ondulations ainsi que leurs zones et portions de raccordement se déforment élastiquement, cette déformation étant partiellement maintenue après l'accrochage du crochet **4** derrière l'oreille **2.**

L'organe à serrer est ainsi soumis à une pression radiale par le collier, laquelle peut être déterminée par un choix judicieux de l'épaisseur de la bande, de la raideur du matériau, et des divers paramètres précédemment évoqués, tels que les rayons **R** et **R′,** ainsi que les angles **A** et **A′.**

Si l'organe à serrer subit une dilatation, généralement d'origine thermique, supérieure à celle du collier, la pression radiale que le collier exerce sur lui n'augmente pas exagérément. En effet grâce à ses diverses ondulations le collier peut facilement absorber la dilatation différentielle, sans déformation permanente d'aucune zone de la bande métallique dont le matériau peut rester dans son domaine d'élasticité. A l'inverse, si l'organe à serrer et le collier subissent un refroidissement important, par exemple s'ils sont placés dans une région de grand froid dont la température est très inférieure à la température ambiante au moment du montage du collier, la déformation élastique initiale du collier et l'énergie ainsi emmagasinée lui permettent de se contracter et de compenser la diminution du diamètre de l'organe à serrer, tout en maintenant une pression radiale suffisante sur ce dernier.

## Revendications

1. Collier de serrage constitué par une bande métallique *(**1**)* enroulée sur elle-même, dont les extrémités sont respectivement munies de moyens complémentaires d'accrochage comportant, notamment, un crochet *(**4**)* susceptible de passer derrière un épaulement ou oreille *(**2**)* au cours de l'opération de serrage, l'extrémité intérieure de la bande se prolongeant, dans la position fermée du collier, au moins au-delà du crochet, et ledit collier présentant au moins un groupe *(**5a, 5b**)* de deux ondulations, chacune d'elles en forme de boucle ouverte, reliées entre elles par une portion de bande *(**5e**)*, l'ensemble desdites ondulations faisant saillie radialement par rapport à la périphérie externe du collier, cependant que la zone de raccordement *(**5c, 5d**)* d'au moins une ondulation *(**5a, 5b**)* au collier est constituée par une portion de bande de profil circulaire, caractérisé en ce que la portion de bande *(**5e**)* reliant les deux ondulations d'un groupe fait saillie radialement par rapport à la périphérie externe du collier et que le profil circulaire de la portion de bande de raccordement présente, à l'état ouvert du collier, un rayon intérieur ***R*** au moins égal à deux fois l'épaisseur de la bande et s'étend, dans les mêmes conditions, sur un arc ***A*** d'au moins 90° et, de préférence voisin de 150°, cependant que l'extrémité intérieure de la bande se prolonge, au moins à l'état fermé du collier, au-delà de l'espace situé entre les zones de raccordement *(**5c, 5d**)* du groupe d'ondulations.

2. Collier selon la revendication 1, caractérisé en ce qu'un groupe *(**5**)* de deux ondulations est disposé sur le brin extérieur de la bande au voisinage mais en deçà du crochet *(**4**)*.

3. Collier selon la revendication 1, caractérisé en ce que son crochet *(**4**)* est constitué par un groupe de deux ondulations *(**4a-4b**)* , seule l'une d'entre elles *(**4a**)* étant raccordée au collier, tandis que l'extrémité libre de l'autre *(**4b**)* constitue l'extrémité *(**4f**)* du crochet *(**4**)*.

## Claims

1. A clamp fitting constituted by a metal band *(**1**)* wound on itself, whose ends are respectively provided with complementary hooking means, comprising, in particular, a hook *(**4**)* capable of passing behind a shoulder or ear *(**2**)* during the clamping operation, the inner end of the band extending, in the closed position of the clamp fitting, at least beyond the hook, wherein the clamp fitting presents at least one group *(**5a-5b**)* of two undulations, each in the form of an open loop connected each other by a band portion *(**5e**)*, said undulation as a whole projecting radially with respect to the outer periphery of the clamp fitting, while the zone of join *(**5c-5d**)* of at least one undulation *(**5a-5b**)* to the clamp fitting is constituted by a portion of band of circular profile, characterized in that the band portion *(**5e**)* connecting the two undulations of a group is projecting radially with respect to the outer periphery of the clamp fitting and in that the circular profile of the portion of band in the zone of join presents, in the open state of the clamp fitting, a radius at least equal to twice the thickness of the band and extends, in the same conditions, over an arc of at least 90° and preferably close to 150°, whilst the inner end of the band extends, at least in the closed position of the clamp fitting, beyond the area located between the zones of join *(**5c***-***5d**)* of the group of undulations.

2. A clamp fitting of Claim 1, characterized in that a group *(**5**)* of two undulations is disposed on the outer portion of the band in the vicinity, but this side, of the hook *(**4**)*.

3. A clamp fitting of Claim 1, characterized in that its hook *(**4**)* is constituted by a group of two undulations *(**4a-4b**)*, only one *(**4a**)* of them being joined to the clamp fitting, whilst the free end of the other *(**4b)*** constitutes the end *(**4f**)* of the hook *(**4**)*.

## Patentansprüche

1. Spannband bestehend aus einem in sich aufgerollten Metallband (1), dessen Enden mit komplementären Verhakungsmitteln versehen sind, die insbesondere einen Haken (4) umfassen, der während des Spannvorgangs hinter eine Schulter oder ein Ohr (2) gelangen kann, wobei das innere Ende des Bandes in der geschlossenen Position des Spannbandes wenigstens über den Haken hinausragt, und wobei das Spannband wenigstens eine Gruppe (5a, 5b) von zwei Wellungen, jede in Form einer offenen Schlaufe, aufweist, die durch einen Bandteil (5e) miteinander verbunden sind, wobei die Gesamtheit der Wellungen radial in bezug auf den äußeren Umfang des Spannbandes vorspringt, während die Verbindungszone (5c, 5d) wenigstens einer Wellung (5a, 5b) am Spannband durch einen Bandteil mit kreisförmigem Profil gebildet ist, dadurch gekennzeichnet, daß der Bandteil (5e), der die beiden Wellungen einer Gruppe verbindet, radial in bezug auf den äußeren Umfang des Spannbandes vorspringt, und daß das kreisförmige Profil des Verbindungsbandteils im offenen Zustand des Spannbandes einen inneren Radius R aufweist, der zumindest gleich der doppelten Dicke des Bandes ist, und sich unter den gleichen Bedingungen über einen Bogen A von mindestens 90°, vorzugsweise annähernd 150°, erstreckt, während sich das innere Ende des Bandes, zumindest in geschlossenem Zustand des Bandes, über den Bereich hinaus erstreckt, der sich zwischen den Verbindungszonen (5c, 5d) der Gruppe von Wellungen befindet.

2. Spannband nach Anspruch 1, dadurch gekennzeichnet, daß eine Gruppe (5) von zwei Wellungen auf dem äußeren Abschnitt des Bandes in der Nähe aber diesseits des Hakens (4) angeordnet ist.

3. Spannband nach Anspruch 1, dadurch gekennzeichnet, daß sein Haken (4) durch eine Gruppe von zwei Wellungen (4a-4b) gebildet ist, wobei nur eine von ihnen (4a) mit dem Spannband verbunden ist, während das freie Ende der anderen (4b) das Ende (4f) des Hakens (4) bildet.
